# EUROPEAN PATENT APPLICATION

(11) **EP 4 815 217 A1**
(43) Date of publication of application: **30.09.2026**
(21) Application number: 25166544.4
(22) Date of filing: 27.03.2025
(51) Int. Cl.: H01R 24/38, H01R 13/703, H01R 13/64, H01R 13/53, H01R 13/713

(54) **ROTATABLE POWER CONNECTION ASSEMBLY WITH INTEGRATED HVIL TERMINALS**

(71) Applicant: Aptiv Technologies AG, 8200 Schaffhausen (CH)
(72) Inventor: PORTIER, Vincent, 28110 Lucé (FR); BELLIARD, Frederic, 28170 Trembley-les-Villages (FR)
(74) Representative: INNOV-GROUP

(57) **Abstract**

A power connection assembly (1) for a motor vehicle, consisting of a connector (2) and a counter-connector (3). The connector (2) and the counter-connector (3) each accommodates a power terminal (45, 7) and connection means (47, 24) integrated into an HVIL circuit. The connector (2) and the counter-connector (3) are designed to mate in multiple orientations around a central axis, and the HVIL connection means (47, 24) establish a connection regardless of the connectors' orientation.

A method for mating the connector (2) and the counter-connector (3).

## Description

### Technical Field

The present disclosure relates to power connection assemblies designed for high-voltage applications, particularly in the automotive field. Such assemblies comprise a connector and a counter-connector, and accommodate power terminals and terminals included in a HVIL (High-Voltage Interlock Loop) circuit. More specifically this document concerns connectors that are used, for example, in AC/DC inverters, DC/DC converters, circuits for high-voltage batteries, power electric boxes, high-voltage power distribution units, etc.

### Background

High-voltage (HV) power connections are critical in modern electrical systems, especially in electric and hybrid vehicles. HV cable connectors are electrically and mechanically linked to power cables which become increasingly larger in cross-section, and consequently increasingly rigid. Power connectors of the prior art often lack the flexibility needed for easy installation and maintenance, particularly in confined spaces. Existing solutions may require precise alignment and are prone to connection failures due to misalignment or mechanical stress. It could therefore be advantageous to have a connector assembly in which a connector can be coupled to a counter-connector with as many orientations as possible in relation to each other. The present disclosure aims at addressing these issues, in particular when elements of a HVIL circuits are integrated in the connectors.

There are connector assemblies in which two terminals connected to a HVIL circuit are accommodated in a connector, while a shunt is accommodated in a counter-connector. Thus, when the connector is mated to the counter-connector, the shunt closes the HVIL circuit. In other words, in this type of connector, there is at least one way for power, and two ways for the signal transmitted in the HVIL circuit. So, in the end, there are at least three ways. However, it would be advantageous to retain the option of using a HVIL circuit, in such a kind of connectors.

### Summary

It is disclosed below, a power connection assembly for a motor vehicle comprising a connector and a counter-connector,
- the connector comprising a first housing, in which are accommodated, on the one hand, a first power terminal and, on the other hand, first connection means integrated in an HVIL circuit,
- the counter-connector comprising a second housing, in which are accommodated, on the one hand, a second power terminal and, on the other hand, second connection means integrated in the HVIL circuit. In this connection assembly, the first power terminal and the second power terminal comprise a first contact portion and a second contact portion respectively, the first and second contact portions having axial symmetry about a central longitudinal axis, and the first and second contact portions being configured (when the connector is mated to the counter-connector) to cooperate mechanically with each other and to be connected electrically with each other, regardless of the orientation of the connector and the counter-connector in relation to each other, around the central longitudinal axis. Further, the first and second housings have mating portions that are configured to mate with each other according to a plurality of orientations relative to one another about the central longitudinal axis and the first and second connection means of a HVIL circuit are configured (when the connector is coupled to the counter-connector) to establish a connection according to a plurality of orientations of the connector and the counter-connector relative to each other, around the central longitudinal axis.

In other words, in such a connection assembly, the first and second contact portions have an axial symmetry about a central longitudinal axis, therefore they do not themselves prevent the connector and the counter-connector to rotate with regard to each other about the central longitudinal axis. For the connection assembly to be functional, i.e. for the power to pass from one connector to the other, regardless of the orientation around the central longitudinal axis, it is sufficient for the contact portions to be symmetrical around the central longitudinal axis. The other portions of the terminals can be of any shape as long as they do not cooperate with each other. Further, a similar reasoning applies for the HVIL circuits and its connection means respectively integrated in the connector and the counter-connector. Then, the connector housings must also have, in the area or the portion on which they interfere with each other, a symmetry such that they can be connected to each other at different angles.

As the mating and connection of the connector with the counter-connector can be done from several angles, the connector assembly can help to avoid, or limit, the bending of power cables.

According to another aspect, the first connection means of the HVIL circuit comprise two terminal blades of respectively two different polarities, extending in a longitudinal direction parallel to the central longitudinal axis CLA and the second connection means of the HVIL circuit comprise a cylindrical shunt configured to establish an electrical connection between the two terminal blades. It is advantageous that the two terminal blades are supported by one of the connector and the counter-connector which is fastened to a support. In other words, it is advantageous that the two terminal blades are supported by one of the connector and the counter-connector which is not the cable connector. Indeed, these two terminal blades are linked to electrical wires, if they are fixed relatively to the support, this prevents the wires from becoming tangled and/or torn off.

According to another aspect, the first connection means of the HVIL circuit comprise two terminal blades of respectively two different polarities, extending in a longitudinal direction parallel to the central longitudinal axis (CLA) and the second connection means of the HVIL circuit comprise a cylindrical shunt configured to establish an electrical connection between two terminal blades. As the shunt is not necessarily connected to electrical wires coming out of the connector/counter-connector, the fact that the connector/ counter-connector can be rotated 360° does not cause any problem of entanglement or tearing

According to another aspect, the two terminal blades are supported by a terminal holder accommodated in one of the first and second power terminals. This avoids creating and mating, next to a single power contact, one or more contacts that would prevent rotation about an axis of rotation passing through a single power contact. For example, advantageously, the terminal holder is accommodated in the first power terminal (that is the one which is accommodated in the fixed connector), and the shunt is supported by a shunt holder inserted in the second power terminal (that is the one which is accommodated in the connector that can rotate).

According to another aspect, the first power terminal is a male terminal and the second terminal is a female terminal.

According to another aspect, the first contact portion and the second contact portion each have a contact surface of revolution about the central longitudinal axis. Thus, the connector and the mating connector can be mated not only according to a greater or a lesser number of positions around the central longitudinal axis, but even, in this case, in an infinite number of positions around this axis.

According to another aspect, the first housing and the second housing each comprise shielding means, the respective shielding means of the first housing and the second housing being configured to establish an electrical connection over 360° around the central longitudinal axis. For example, advantageously, si the shielding means of the first housing comprise a first shielding contact surface of revolution around the central longitudinal axis and the shielding means of the second housing comprises tabs regularly arranged around the central longitudinal axis, these tabs having a convex surface in contact with first shielding contact surface.

According to another aspect, the power connection assembly, advantageously, comprises locking means configured to lock (for example, by translation between an unlocking position and a locking position) the rotation, around central longitudinal axis, of the connector relatively to the counter-connector.

According to another aspect, it is disclosed below a method of mating a one-way power connector with a one-way power counter-connector, the connector and the counter-connector comprising each respectively a housing. Each housing is equipped with a power terminal and connection means integrated in a HVIL circuit. For example, the connector is fastened onto a support whereas the counter-connector is a cable connector.

The method comprises a step of mating the counter-connector to the connector. The connector and the counter-connector housings are configured to rotate relatively to each other around a central longitudinal axis, the power terminals are configured to rotate relatively to each other around the central longitudinal axis, and the respective connection means integrated in a HVIL circuit are configured to rotate relatively to each other around the central longitudinal axis. Therefore, the step of mating the connector to the counter-connector can be carried out according to many, even an infinite number of, angles of the connector relatively to the counter-connector, around the central longitudinal axis.

### Brief description of the figures

Further features and advantages of the invention will become apparent upon reading the detailed description and the accompanying drawings, in which:
FIG. 1 shows a schematic perspective exploded view of a connection assembly.
FIG. 2 shows a schematic perspective view of the connection assembly shown in FIG. 1.
FIG. 3 is a schematic longitudinal cross-section of the female connector of the connection assembly shown in Figures 1 and 2.
FIG. 4 is a schematic longitudinal cross-section of the male connector of the connection assembly shown in Figures 1 and 2.
FIG. 5 is schematic plan view (from its mating face) of the male connector shown in Figure 4.
FIG. 6 is a schematic perspective view of the terminals integrated into a HVIL circuit.
FIG. 7 is a schematic longitudinal cross-section of the connection assembly shown in Figures 1 and 2.
FIG. 8 is schematic plan view (from above) of the connection assembly shown in Figures 1 and 2.
FIG. 9 illustrates schematically the locking means of the connection assembly shown in Figures 1 and 2.

### Detailed description

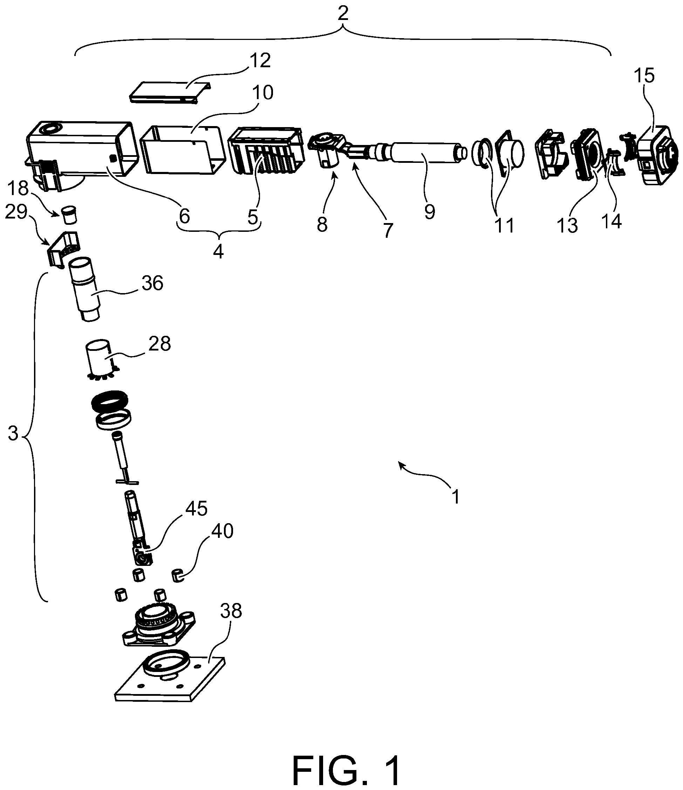

Figure 1 illustrates an example of connection assembly 1. According to this example, the connection assembly 1 comprises a connector 2 and a counter-connector 3. For example, the connector 2 (second connector in the claims) is a female connector (socket connector). For example, the connector 2 is a cable connector. For example, the counter-connector 3 (first connector in the claims) is a connector base. For example, the counter-connector 3 is a male connector (header connector). But it could be the other way round, the connector 2 could have referred to the connector base and the counter-connector 3 could have referred to the cable connector. Similarly, the cable connector could have corresponded to the male connector and the counter-connector 3 could have corresponded to the female connector.

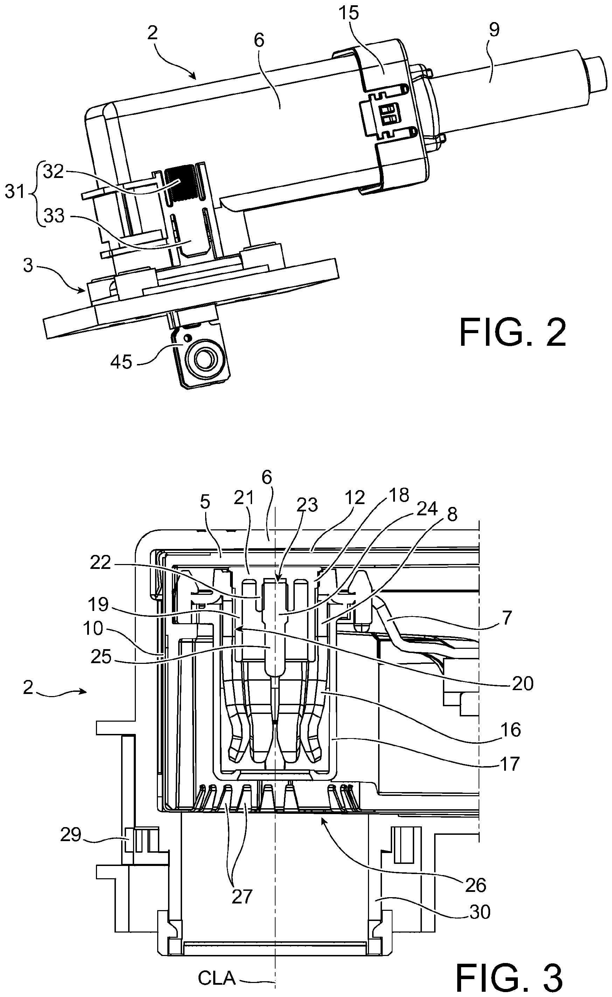

The connector 2 comprises a female housing 4 (second housing in the claims) consisting of an inner female housing 5 and an outer female housing 6, both formed, for example, of a moulded insulating plastic material. The connector 2 also comprises a female terminal 7 (second power terminal in the claims) comprising a socket 8 connected, for example, by crimping (alternatively, soldering, etc.) to a power cable 9. For example, the power cable 9 has a cross-section of up to 50 mm². In the example shown, the female terminal 7 is a right-angled terminal. However, according to a variant, it could be a 180° straight female terminal. The connector 2 also has a metal shielding cage 10 inserted between the inner female housing 5 and the outer female housing 6. The shielding cage 10 is electrically connected to the shielding sheath of the power cable 9 by means of a metal ferrule 11 and a metal cover 12 closing the shielding cage 10. The connector 2 is provided with a rear seal 13, strain relief means 14, and a rear cover 15 to close the female housing 4 (See Figs. 1 and 2).

The socket 8 has elastic blades 16 configured to make electrical contact with a male terminal 45 (i.e., a male pin) accommodated in the counter-connector 3. A protective cap 17 made of moulded insulating plastic is mounted on the female terminal 7, around the elastic blades 16, thus helping to ensure IP2X protection (Ingress Protection against solid bodies over 12 mm) (See Fig. 3).

A shunt holder 18 made of moulded insulating plastic is also mounted on the female terminal 7. More specifically, the socket 8 has a generally cylindrical shape extending longitudinally along a central longitudinal axis CLA, between an opening through which the pin of the male terminal 45 is inserted and an opening into which the shunt holder 18 is inserted (for example, by force). The shunt holder 18 can be held between the socket 8 and the inner female housing 5. The shunt holder 18 has a shunt holder outer wall 19 with a cylindrical shape around the central longitudinal axis CLA, in contact with the inner wall 20 of the socket 8. In addition, the shunt holder 18 has a transverse wall 21, perpendicular to the central longitudinal axis CLA, and a shunt holder inner wall 22 with a cylindrical shape around the central longitudinal axis CLA. For example, the shunt holder inner wall 22 forms a cavity 23 whose bottom is closed by the transverse wall 21. A shunt 24 is inserted (for example, by force) into this cavity 23. The shunt 24 is in the form of a cylindrical rod, revolving around the central longitudinal axis CLA. The shunt 24 has one longitudinal end configured to be held in the cavity 23, as well as an opposite longitudinal end configured to facilitate connection with flexible terminal blades 47 made of metal. The shunt 24 has a contact portion 25 protruding from the cavity 23. Advantageously, the contact portion 25 also protrudes from the opening bordered by the shunt holder outer wall 19.

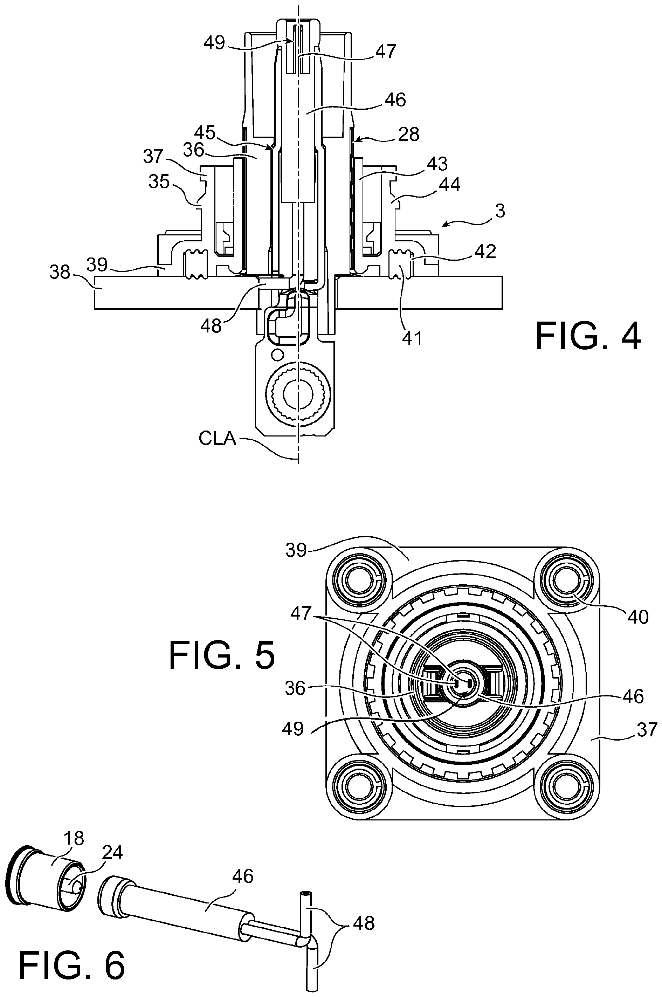

The shielding cage 10 has a bottom essentially perpendicular to the central longitudinal axis CLA. A circular opening 26 around the central longitudinal axis CLA is arranged in this bottom. This opening 26 is bordered by flexible tabs 27 curved towards the inside of the shielding cage 10. These flexible tabs 27 are configured to establish an electrical connection with a cylindrical shielding sleeve 28 (advantageously of revolution) centred on the central longitudinal axis CLA and carried by the counter-connector 3 (See Figs. 3 and 4).

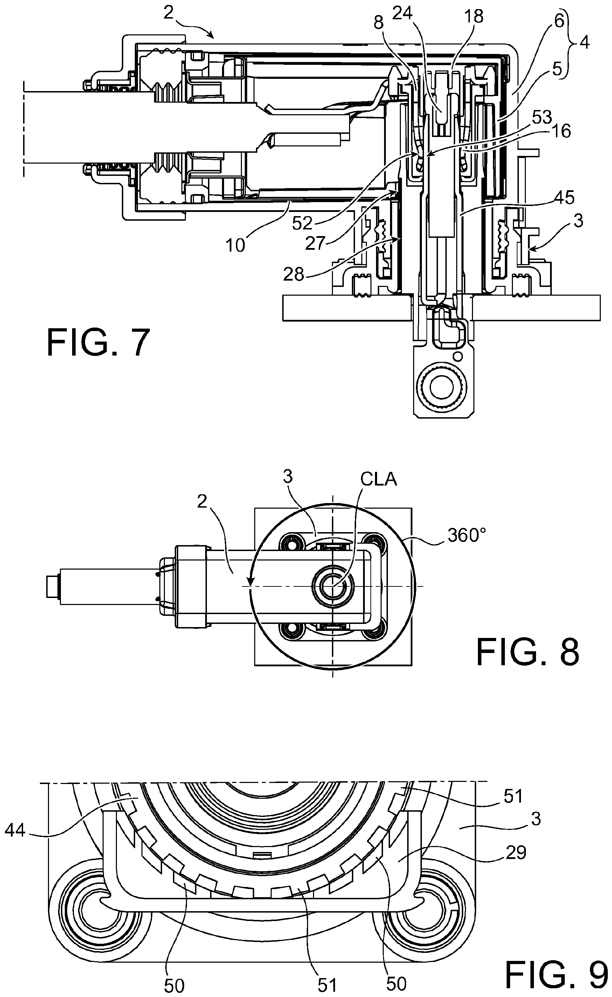

The connector 2 also has locking means configured to lock the rotation of the connector 2 relative to the counter-connector 3 around the central longitudinal axis CLA. For example, the locking means comprises a locking slider 29. The locking slider 29 is mounted on the female housing 4 (more particularly, on the outer female housing 6) so that it can slide and is configured to be moved in a plane perpendicular to the central longitudinal axis CLA, between a locking position and an unlocking position (unlocking position being illustrated in Fig. 9).

The connector 2 has a cylindrical skirt 30 configured in particular to ensure coupling with the counter-connector 3, as well as to contribute to an interfacial sealing between the connector 2 and the counter-connector 3.

Advantageously, the connector 2 includes locking means 31 (see Fig. 2). For example, each locking means 31 includes a tab hingedly connected to the external surface of the female housing 4 (more particularly, on the surface of the outer female housing 6) at a junction. For example, on one side of the junction, the tab has an actuation portion 32, while on the other side of the junction, the tab has a locking portion 33. Thus, the tab is configured so that pressure on the actuation portion 32 in the direction of the central longitudinal axis CLA moves the locking portion 33 away from it. The locking portion 33 has a lug configured to cooperate with a complementary circular rib 35 on the outer surface of the housing of the counter-connector 3 (see Fig. 4). When the connector 2 is coupled with the counter-connector 3, the lug hooks onto the rib 35, so as to retain the connector 2 on the counter-connector 3, locked parallel to the longitudinal direction of the central longitudinal axis CLA.

The counter-connector 3 has a housing consisting of a male inner housing 36 and a male outer housing 37, both made of, for example, moulded insulating plastic. The male outer housing 37 is designed to be screwed onto a support 38 (e.g. the wall of an electrical appliance, such as a converter, a power electric box, etc.). The male outer housing 37 of the counter-connector 3 has a flange 39 with holes for the passage of metal spacers 40, each forming a passage for a screw used to attach the counter-connector 3 to its support 38. A gasket 41 is placed in a circular groove 42 to ensure sealing between the male outer housing 37 and the support 38. The male outer housing 37 has an inner cylindrical wall 43 and an outer cylindrical wall 44, both centred on the central longitudinal axis CLA. The inner cylindrical wall 43 forms a chimney in the centre of which the male inner housing 36 is inserted and held. The male inner housing 36 has a cylindrical passage into which the pin of the male terminal 45 is inserted and held. The rib 35 mentioned above extends radially from the outer surface of the outer cylindrical wall 44. The cylindrical shielding sleeve 28 mentioned above is arranged between the male inner housing 36 and the male outer housing 37 of the counter-connector 3.

The pin of the male terminal 45 is hollow. It is formed in a cut and rolled sheet metal. A terminal holder 46 made of moulded plastic is inserted and held inside the pin of the male terminal 45 (for example, by force insertion, using clips, etc.). For example, the terminal holder 46 supports two elastic terminal blades 47, each electrically connected to a conducting wire 48. For example, the terminal blades 47 are symmetrical with respect to the central longitudinal axis CLA. For example, a portion of the terminal blades 47 and wires 48 is overmoulded in the material forming the terminal holder 46. At one of its ends, the terminal holder 46 has, for example, a bowl 49 in which a connection portion of each of the two terminal blades 47 emerges. The connection portions are configured to establish a connection with the shunt 24 mentioned above.

When the connector 2 is fully mated with the counter-connector 3, contact areas of the elastic blades 16 of the socket 8 rest on the outer surface of the pin 45 and the shunt 24 is inserted between the terminal blades 47 to establish an electrical connection with it and close the HVIL circuit (see Fig. 7). Similarly, the flexible tabs 27 of the shielding cage 10 rest on the shielding sleeve 28.

The connector 2 and the counter-connector 3 can be coupled to each other in any angular position, relative to each other, around the central longitudinal axis CLA. Similarly, the connector 2 and the counter-connector 3 can, once coupled, be moved relative to each other in rotation over 360° around the central longitudinal axis CLA (as long as they are not locked with the locking slider 29). Whatever the angular position of the connector 2 in relation to the counter-connector 3, the elastic blades 16 rest on the external surface of the pin of the male terminal 45, and a first contact portion 52 on the elastic blades 16 establishes an electrical contact with a second contact portion 53 on the external surface of the pin of the male terminal 45. Whatever the angular position of the connector 2 in relation to the counter-connector 3, the terminal blades 47 rest on the shunt 24 and establish an electrical connection so as to close the HVIL circuit. And whatever the angular position of the connector 2 in relation to the counter-connector 3, the flexible tabs 27 of the shielding cage 10 rest on the shielding sleeve 28 and establish an electrical connection between the shielding means of the connector 2 and the counter-connector 3. Indeed, the external surface of the pin of the male terminal 45, the shunt 24 or the shielding sleeve 28 comprises a smooth and cylindrical surface at their respective contact areas with respectively the elastic blades 16 of the socket 8, the terminal blades 47 and the flexible tabs 27 of the shielding cage 10.

To lock the angular position of the connector 2 with respect to the counter-connector 3, the locking slider 29 is moved from the unlocking position to the locking position in the direction of the central longitudinal axis CLA. The locking slider 29 has notches 50 configured to cooperate with protrusions 51 formed on the outer surface of the outer cylindrical wall 44 of the counter-connector 3.

It can be seen that, because of the engagement of the notches 50 with the protrusions 51, there is a discrete number of angular positions between the connector 2 and the counter-connector 3. However, according to variants, with another type of means for locking the rotation of the connector 2 with respect to the counter-connector 3, or in the absence of such means, there could be an infinite number of angular positions between the connector 2 and the counter-connector 3.

In the case where a discrete number of angular positions are provided between the connector 2 and the counter-connector 3, it is not essential to have cylindrical symmetry of revolution of the respective elements of the connector 2 and counter-connector 3, which cooperate with each other.

## Claims

1. A power connection assembly (1) for a motor vehicle comprising a connector (2) and a counter-connector (3),
- the connector (2) comprising a first housing (36, 37), in which are accommodated, on the one hand, a first power terminal (45) and, on the other hand, first connection means (47) integrated in an HVIL circuit,
- the counter-connector (3) comprising a second housing (4), in which are accommodated, on the one hand, a second power terminal (7) and, on the other hand, second connection means (24) integrated in the HVIL circuit,
in which the first power terminal (45) and the second power terminal (7) comprise a first contact portion (52) and a second contact portion (53) respectively, the first and second contact portions (52, 53) having an axial symmetry about a central longitudinal axis (CLA), and the first and second contact portions (52, 53) being configured to cooperate mechanically with each other and to be connected electrically with each other, regardless of the orientation of the connector (2) and the counter-connector (3) in relation to each other, around the central longitudinal axis (CLA),
**characterised in that** the first (36, 37) and second (4) housings have mating portions that are configured to mate with each other according to a plurality of orientations relative to one another about the central longitudinal axis (CLA) and **in that** the first (47) and second (24) connection means of the HVIL circuit are configured to establish a connection regardless of the orientation of the connector (2) and the counter-connector (3) relative to each other, around the central longitudinal axis (CLA).

2. The power connection assembly (1) according to claim 1, in which the first connection means of the HVIL circuit comprise two terminal blades (47) of respectively two different polarities, extending in a longitudinal direction parallel to the central longitudinal axis (CLA) and the second connection means of the HVIL circuit comprise a cylindrical shunt (24) configured to establish an electrical connection between the two terminal blades (47).

3. The power connection assembly (1) according to claim 2, wherein the two terminal blades (47) are supported by a terminal holder (46) accommodated in one of the first (45) and second (7) power terminals.

4. The power connection assembly (1) according to claim 3, wherein the terminal holder (46) is accommodated in the first power terminal (45).

5. The power connection assembly (1) according to claim 4, wherein the shunt (24) is supported by a shunt holder (18) inserted in the second power terminal (7).

6. The power connection assembly (1) according to any one of claims 2 to 5, wherein the first power terminal is a male terminal (45) and the second terminal is a female terminal (7).

7. The power connection assembly (1) according to any one of the preceding claims, wherein the first contact portion (25) and the second contact portion (25) each have a contact surface of revolution about the central longitudinal axis.

8. The power connection assembly (1) according to any one of the preceding claims, wherein the first housing (36, 37) and the second housing (4) each comprise shielding means, the respective shielding means of the first housing (36, 37) and the second housing (4) being configured to establish an electrical connection over 360° around the central longitudinal axis (CLA).

9. The power connection assembly (1) according to claim 8, wherein the shielding means of the first housing (36, 37) comprise a first shielding contact surface of revolution around the central longitudinal axis (CLA) and the shielding means of the second housing (4) comprises tabs (27) regularly arranged around the central longitudinal axis, these tabs (27) having a convex surface in contact with first shielding contact surface.

10. The power connection assembly (1) according to any one of the preceding claims, comprising locking means (29) configured to lock the rotation, around central longitudinal axis (CLA) of the connector (2) relatively to the counter-connector (3).

11. A method of mating a one-way power connector (2) with a one-way power counter-connector (3), the connector (2) and the counter-connector (3) comprising each respectively a housing (36, 37; 4), being each equipped with a power terminal (45, 7) and connection means (47, 24) integrated in a HVIL circuit, the connector (2) being fastened onto a support (38) and the counter-connector (3) being a cable connector (2), and the method comprising a step of mating the counter-connector (3) to the connector (2),
**characterized in that** the connector and the counter-connector housings (36, 37; 4) are configured to rotate relatively to each other around a central longitudinal axis (CLA), the power terminals (45, 7) are configured to rotate relatively to each other around the central longitudinal axis (CLA), and the respective connection means (47, 24) integrated in a HVIL circuit are configured to rotate relatively to each other around the central longitudinal axis (CLA), and the step of mating the connector (2) to the counter-connector (3) is carried out according to any angle of the connector (2) relatively to the counter-connector (3), around the central longitudinal axis (CLA).
